# EUROPEAN PATENT APPLICATION

(11) **EP 4 293 084 A1**
(43) Date of publication of application: **20.12.2023**
(21) Application number: 22178903.5
(22) Date of filing: 14.06.2022
(51) Int. Cl.: C09D 9/04

(54) **COMPOSITION AND METHOD FOR DEINKING A PRINTED POLYMER SUBSTRATE**

(71) Applicant: polycirQ GmbH, 50667 Köln (DE); Siegwerk Druckfarben AG & Co. KGaA, 53721 Siegburg (DE)
(72) Inventor: Kredel, Julia, 53721 Siegburg (DE); Fehr, Ingo, 53125 Bonn (DE); Leineweber, Ralf, 53721 Siegburg (DE)
(74) Representative: Hepp Wenger Ryffel AG

(57) **Abstract**

The present invention is related to a composition for deinking of a printed polymer article, comprising a quaternary alkyl ammonium surfactant, a propoxylated, ethoxylated or propoxylated and ethoxylated alcohol, preferably fatty alcohol, and an alkyl amine oxide. The present invention is also related to a method for deinking a printed polymer article, comprising the steps of providing an aqueous solution comprising a base and the above composition, adding the printed polymer article to be deinked to the solution, and deinking the printed polymer article under stirring and preferably heating.

## Description

The present invention is related to a composition and method for deinking a printed polymer substrate.

Due to increasing environmental concerns, the conventional approach of throwing away articles after use has to be replaced by approaches involving the recycling of the articles or materials making up those articles.

This applies especially to polymer articles. Articles made of polymer (i.e. synthetic polymers such as polyethylene (PE), polypropylene (PP) or polyethylene terephthalate (PET)) are extremely efficient for the purposes of flexible packaging. However, this advantage has led to an extreme use of polymer materials, and without efficient recycling the environmental pollution that can already be observed (e.g. pollution of the oceans) will increase. This includes increase health hazards due to microplastic waste entering into the environment. Moreover, the polymer waste is landfilled with the high risk of leaking into nature.

Unrecycled polymer material is currently largely incinerated, which is detrimental with respect to the amount of CO₂ released therewith and its contribution to global warming.

In some regions (e.g. the EU) regulations have been implemented requiring a certain recycling rate to be obtained until a certain point in time. Furthermore and independent from regulations, all major brand owners made commitments to increase the amount of recycled material in their products.

Accordingly, there is a need for efficient recycling concepts for polymer material.

With respect to printed articles, this imposes additional requirements. The recyclability of material and quality of recycled material should not be impaired by the printing inks applied thereupon. Extremely critical in this respect is the extrusion step during recycling where the material is processed at higher temperatures resulting in a deterioration of the recycled product quality due to the limited heat resistance of binders and/or pigments present in the printing ink layer. This often leads to the formation of gaseous degradation products and to mal odor. These effects can only partly be compensated by degassing steps during extrusion. Furthermore, caused by the pigment in the printed layer, the recycled material is colored and not transparent, which limits the area of application.

Accordingly, before recycling of printed polymer articles such as flexible or rigid packaging products, it is necessary to remove any ink layers.

There have been suggested in the art recycling technologies that are stated to mitigate the adverse effect of ink during recycling of printed polymers.

In one approach, an organic solvent is brought into contact with a printed polymer. After a rinsing step, the polymer is dried, and the solvent is recovered to be reused (DE-41 22 277 A1, DE-43 42 848 A1). This is a costly process that has not been implemented on a large scale.

In another approach, washing of the printed polymer substrate in a hot alkaline aqueous solution has been suggested (Gecol et al., Colloid Polym. Sci. (2003) 281: 1172-1177). According to that study, a pH value of at least 11 and the addition of a cationic surfactant was necessary for achieving efficient deinking of solvent-based inks from a polymer film.

In US-2015/0 298 360 A1, a method for removing ink printed on a polymer film is described, wherein a printed material is first conditioned in a plunger in order to obtain a film free of impurities, and subsequently said film is ground and subjected to cleaning and washing steps using a cleaning system with a cleaning solution consisting of surfactants in water at basic pH. The method states to allow recovery of the cleaned film, the cleaning solution as well as of the pigments of the ink layer that was applied onto the film. While this method may be suitable on a lab scale, it is difficult to implement in an upscaled commercial process.

None of the above processes has resulted in a fully satisfactory deinking process that can be applied on an industrial scale.

There are two main failure mechanisms in deinking that can deteriorate the quality of a polymer recyclate:

First, the ink may only be partially removed from the surface (incomplete deinking). As a result, apparent/readable text or images on the polymers may still be present after the deinking process.

Secondly, the washed (deinked) polymer surfaces may exhibit a homogenous color intensity without any sharp contrasts or readable text (similar to the effect of recoloring when e.g. white clothing is washed with red clothing, resulting in the white clothing having a (slightly) pink color).

While the problem of incomplete deinking can at least partly be addressed by higher temperatures and/or longer washing times, the other problem of recoloring has been found to increase due to such modifications.

Other process parameters that could principally be beneficial in alleviating the above failure mechanisms (i.e. higher concentrations of surfactants, higher friction and more (clean) alkaline washing solution per mass of treated printed polymer) are either costly or only provide a limited effect.

It was the problem of the present invention to provide an improved deinking of printed polymer substrates.

The above problem has been solved by the composition and deinking process defined in the appended claims.

In detail, the present invention is related to a composition for deinking of a printed polymer article, comprising
a) 15-80 wt.-% of a quaternary ammonium surfactant having the formula NR¹R²R³R⁴⁺ X⁻
   wherein
   R¹, R², R³ and R⁴ are the same or different and denote a C₁₋₂₀ linear or branched alkyl group; and
   X⁻ denotes a physiologically acceptable monovalent anion, preferably a halogenide, more preferably Cl⁻ or Br⁻;
b) 10-65 wt.-% of a propoxylated, ethoxylated or propoxylated and ethoxylated alcohol having the formula CHR⁵R⁶R⁷
   wherein
   R⁵ and R⁶ are the same or different and denote a C₁₋₂₀ linear or branched alkyl group; and
   R⁷ denotes a moiety of the formula CH₂O(PO)ₓ(EO)_{y}-H wherein
   EO is -CH₂CH₂O-
   PO is -CH₂CH₂CH₂O- or -CH(CH₃)CH₂O-
   x and y are the same or different and denote an integer in the range from 0 to 20, with the proviso that x and y cannot
   be both 0 at the same time; and
c) 5-45 wt.-% of an amine oxide having the formula 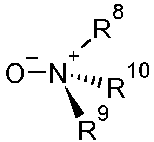
   R⁸ and R⁹ are the same or different and denote H or a C₁₋₂₀ linear or branched alkyl group; and
   R¹⁰ denotes a C₁₋₂₀ linear or branched alkyl group,
wherein the wt.-% are based on the entire weight of the composition, and the sum of wt.-% of components a) to c) does not exceed 100 wt.-%.

It has been found that a composition comprising a combination of three different surfactants results in an improved deinking of printed polymer articles in a heated aqueous alkaline solution, which is superior to a deinking effect provided by any of these surfactants alone.

In the composition of the present invention, as component a) there is a quaternary ammonium surfactant having the formula NR¹R²R³R⁴⁺ X⁻.

Said surfactant is an amphiphilic molecule with a positively charged nitrogen moiety and apolar alkyl moieties attached to it.

Such ammonium compounds are generally known in the art and can be synthesized by conventional methods, for example by a quaternization reaction of a tertiary amine with an alkyl halogenide. There is no specific limitation with respect to the counter ion X⁻ in component a), since for example in the quaternization reaction mentioned above a plurality of different compounds R-X can be used as ingredient. According to the present invention, the counter ion X⁻ in component a) is a physiologically acceptable monovalent anion, for reasons of safety and easy handling.

According to a preferred embodiment, the counter ion X⁻ in component a) is a halogenide. Especially preferred, the counter ion X⁻in component a) is Cl⁻ or Br⁻.

According to the present invention, the non-polar alkyl moieties attached to the positively charged nitrogen moiety are linear or branched alkyl groups. In the formula NR¹R²R³R⁴⁺ X⁻, the linear or branched alkyl groups R¹, R², R³ and R⁴ are the same or different and denote a C₁₋₂₀ linear or branched alkyl group.

According to the present invention, it is preferred that at least one of the linear or branched alkyl groups R¹, R², R³ and R⁴ is a longer (i.e. having at least 5 carbon atoms in the moiety) alkyl group, in order to enhance the surfactant properties of component a).

Thus, according to a preferred embodiment of the present invention, in component a) R¹ denotes a C₅₋₂₀ linear or branched alkyl group, preferably a C₁₀₋₂₀ linear or branched alkyl group, and R², R³ and R⁴ are the same or different and denote a C₁₋₁₀ linear or branched alkyl group, preferably a C₁₋₅ linear or branched alkyl group.

According to another embodiment of the present invention, two, three or all four residues R¹, R², R³ and R⁴ may be longer chain alkyl groups.

According to the present invention, it is preferred that the residues R¹, R², R³ and R⁴ are linear alkyl groups.

In the composition of the present invention, as component b) there is a propoxylated, ethoxylated or propoxylated and ethoxylated alcohol having the formula CHR⁵R⁶R⁷. These are non-ionic surfactants having the general structure 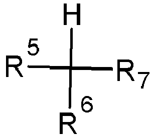 wherein
R⁵ and R⁶ are the same or different and denote a C₁₋₂₀ linear or branched alkyl group; and
R⁷ denotes a moiety of the formula CH₂O(PO)ₓ(EO)_{y}-H.

More specifically, component b) thus has the structure 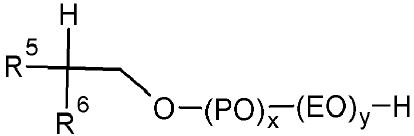 wherein
EO is -CH₂CH₂O-
PO is -CH₂CH₂CH₂O- or -CH(CH₃)CH₂O-.

In other words, component b) thus has the structure 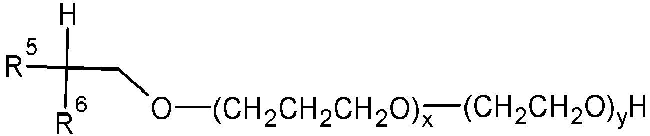 or

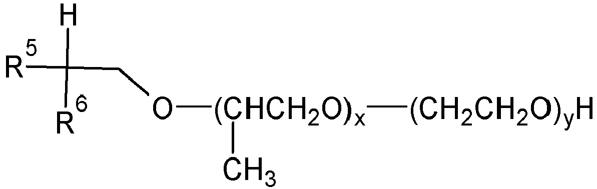

In all of the above formulas,
R⁵ and R⁶ are the same or different and denote a C₁₋₂₀ linear or branched alkyl group; and
x and y are the same or different and denote an integer in the range from 0 to 20, with the proviso that x and y cannot be both 0 at the same time.

In other words, the component b) contains at least one ethoxy or propoxy moiety.

According to a preferred embodiment of the present invention, component b) has the above structure wherein
x=0 and y denotes an integer in the range from 1 to 15, preferably 2 to 10, or
y=0 and x denotes an integer in the range from 1 to 15, preferably 2 to 10.

In other words, according to said preferred embodiment the component b) is either an ethoxylated or a propoxylated compound, not ethoxylated and propoxylated at the same time.

According to another embodiment of the present invention, component b) is ethoxylated and propoxylated at the same time, i.e. neither of x and y is 0.

Component b) is a propoxylated and/or ethoxylated alcohol. It can be derived from ethoxylation and/or propoxylation of an alcohol having the formula 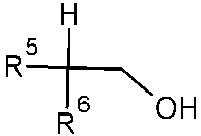 and reaction of said alcohol with ethylene glycol and/or 1,3-propylene glycol in the desired ratios. Said reaction is well-known.

According to a preferred embodiment of the present invention, in component b) R⁵ and R⁶ are the same or different and denote a C₂₋₁₅ linear or branched alkyl group, preferably a C₃₋₁₀ linear or branched alkyl group.

According to a particularly preferred embodiment, component b) is a propoxylated and/or ethoxylated fatty alcohol.

Fatty alcohols can be obtained, for example, from fatty acids by reduction of the carboxyl group to a hydroxy group. Typically, a fatty alcohol is an alcohol having a C6-22 carbon chain.

Thus, according to a preferred embodiment of the present invention where component b) is a fatty alcohol, R⁵ and R⁶ are selected such that at least one of R⁵ and R⁶ is a C₄₋₂₀ linear or branched alkyl group, preferably a C₅₋₁₅ linear or branched alkyl group.

According to a particularly preferred embodiment of the present invention, in component b) the residues R⁵ and R⁶ are different from each other, R⁵ is a C₄₋₂₀ linear or branched alkyl group, preferably a C₅₋₁₅ linear or branched alkyl group, and R⁶ is a C₁₋₁₀ linear or branched alkyl group, preferably a C₂₋₅ linear or branched alkyl group.

In the composition of the present invention, as component c) there is an amine oxide having the formula 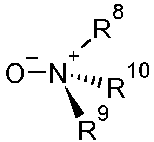 wherein
R⁸ and R⁹ are the same or different and denote H or a C₁₋₂₀ linear or branched alkyl group; and
R¹⁰ denotes a C₁₋₂₀ linear or branched alkyl group.

Amine oxides are known in the art. They can be prepared, for example, by oxidation of a respective tertiary amine with an oxidizing agent such as H₂O₂.

According to a preferred embodiment of the present invention, in component c)
R⁸ and R⁹ are the same or different and denote H or a C₁₋₁₀ linear or branched alkyl group, preferably a C₁₋₅ linear or branched alkyl group; and
R¹⁰ denotes a C₅₋₂₀ linear or branched alkyl group, preferably a C₁₀₋₂₀ linear or branched alkyl group.

In the composition of the present invention, components a), b) and c) are present in specific amounts. The composition of the present invention comprises
15-80 wt.-% of component a),
10-65 wt.-% of component b), and
5-45 wt.-% of component c).

It is to be understood that as used herein the wt.-% are based on the entire weight of the composition, and the sum of wt.-% of components a) to c) does not exceed 100 wt.-%.

According to a preferred embodiment of the present invention, the composition comprises
20-70 wt.-%, preferably 30-60 wt.-% of component a),
15-60 wt.-%, preferably 20-50 wt.-% of component b), and
10-40 wt.-%, preferably 15-30 wt.-% of component c),
based on the entire weight of the composition, and wherein the sum of wt.-% of components a) to c) does not exceed 100 wt.-%.

According to another preferred embodiment of the present invention, the composition comprises a mixture of one or more of components a), components b), and/or components c). For example, the composition of the present invention may comprise 5-45 wt.-%, preferably 10-40 wt.-%, more preferably 15-30 wt.-% of a mixture of component c), preferably 2 different components c), based on the entire weight of the composition.

It has been found that in certain applications the effect of the composition of the present invention can be further increased by the addition of a specific base. Thus, according to another preferred embodiment of the present invention, the composition additionally comprises 0.01-2 wt.-%, preferably 0.05-1 wt.-% of a component d) selected from the group consisting of a trialkyl amine having C₁₋₁₀ linear or branched alkyl groups, a trialkyl phosphine having C₁₋₁₀ linear or branched alkyl groups, and combinations thereof.

It is to be understood that as used herein the wt.-% are based on the entire weight of the composition, and the sum of wt.-% of components a) to d) does not exceed 100 wt.-%.

According to a preferred embodiment, component d) is a C₁₋₆, preferably a C₂₋₅ trialkyl amine, wherein the alkyl moieties can be the same or different. Preferably, the alkyl moieties are the same. Preferred examples are triethyl amine, tripropyl amine, tributyl amine and tripentyl amine.

According to another preferred embodiment, component d) is a C₂₋₁₀, preferably a C₃₋₈ trialkyl phosphine, wherein the alkyl moieties can be the same or different. Preferably, the alkyl moieties are the same. Preferred examples are triethyl phosphine, tripropyl phosphine, tributyl phosphine and tripentyl phosphine, trihexyl phosphine, triheptyl phosphine and trioctyl phosphine.

According to another preferred embodiment, the composition according to the present invention may additionally comprise 1-30 wt.-%, preferably 2-20 wt.-% at least one additive. It is to be understood that as used herein the wt.-% are based on the entire weight of the composition, and the sum of wt.-% of components a) to d) and of the additive(s) does not exceed 100 wt.-%.

Any additive commonly used in surfactant-containing compositions, such as a defoaming agent or a complexing agent, may be used. According to a preferred embodiment, said additive is preferably selected from the group consisting of mineral oil, silicon-based defoamer, phosophonic acid derivatives, phosphine acid derivatives, alkylethoxylates, alkylether, acrylic acid, hydrocarbons such as pentane, hexane, heptane, octane, nonane or decane (both n- and iso-forms) and combinations thereof.

According to an alternative embodiment of the present invention, the composition according to the present invention may be diluted with a conventional organic solvent such as a C₁₋₄ alcohol.

The composition according to the present invention may be prepared by adding the components a) to c), and optionally component d) and additives, together in a suitable vessel, and mixing the components, preferably under stirring and optionally heating.

The composition according to the present invention can be considered as a concentrate, and may be diluted before use in the method of the present invention. Thus, the present invention is also related to a diluted composition, comprising the composition according to the present invention and a solvent, preferably water, in a ratio from 1:5 to 1:10.

The composition according to the present invention is suitable for efficiently deinking a printed polymer article.

According to the present invention, the printed polymer article may be selected from the group consisting of flexible and rigid packagings, labels and shrink sleeves.

Many articles such as food articles are stored in flexible packagings, i.e. packagings which are made of a material which shows some flexibility and can thus undergo certain modifications of its shape. Flexible packagings are widely used in areas like food packaging (e.g., retortable bags, frozen food packaging, refrigerated food packaging, shelf stable food packaging, dry goods packaging, liquid food packaging, fast food wrappers and bags), pharmaceutical packaging (e.g., primary packaging, secondary packaging, booklets and instructions), personal hygiene packaging (e.g. soap packaging, hair care packaging, baby care packaging, feminine care packaging, male care packaging), home care packaging (e.g. detergent packaging, cleaner packaging), agricultural packaging (e.g., herbicide packaging, pest control packaging, fertilizer bags), industrial packaging (e.g. shopping bags, construction wrappers and bags), and pet care packaging (e.g., pet food bags, pet medical packaging, pet hygiene packaging) .

Rigid packagings such as HDPE or PP container are also known packagings that may comprise a printed ink layer. Such rigid packagings may also be deinked with the composition of the present invention.

Labels and shrink sleeves are widely used for e.g. polymer bottles and any kind of packaging containers.

Flexible packagings, labels and shrink sleeves are usually prepared by applying a printed layer, preferably by flexographic or gravure printing, onto one side of the polymer substrate, in order to provide the packaging, label or shrink sleeve with information, design or pictures. This and further conversion to a packaging structure is known in the art.

The substrate of said printed product can be any polymer substrate. Preferably, the substrate is a polymer substrate as conventionally used for flexible and rigid packagings. Examples of suitable polymer substrates are polyethylene (PE), polypropylene (PP), polyamide (PA) or polyethylene terephthalate (PET). These substrates may have undergone modification such as metallization or application of a barrier coating like an ethylene-vinylalcohol (EVOH) coating.

According to a preferred embodiment of the present invention, the substrate of the printed polymer article is selected from the group consisting of polyethylene and polypropylene.

According to the present invention, the printed article may be a laminate. The term "laminate" refers to a product that consists of a stack of layers, wherein one layer (an outermost layer or a core layer) is defined as substrate or substrate layer. For example, the substrate layer may be a polymer layer, preferably a transparent polymer layer. A laminate may also preferably comprise more than one of those substrate layers, most preferably as outermost layers, and in between these substrate layers there may be provided a printed layer or several printed layers. These intermediate printed layers are protected from environmental influences.

On at least one, preferably one surface of said substrate, a primer layer may be applied. The primer layer can be applied onto the substrate by any conventional coating technique, preferably by flexographic or gravure printing. The primer layer can be applied onto the substrate in such an amount that a coating weight of 0.2-1.5 g/m², preferably 0.4-1.3 g/m², and especially preferred 0.6-1.0 g/m² is obtained.

Said primer layer can be selected such that it is decomposed under the conditions of the deinking step of the deinking method described below. Such primer layers are known in the art, for example from WO 2021/165081 A1.

The printed article to be deinked with the method of the present invention further comprises a printing ink layer on said substrate, preferably on a side of an optionally present primer layer that is not in contact with said substrate. It is also possible to provide more than one printing ink layer onto the substrate or the optional primer layer.

The ink layer(s) applied onto the substrate or the optional primer layer may be made from any ink conventionally used in flexible packaging applications. Preferably, the ink layer is applied using a solvent-based ink. Such an ink can be applied on the substrate by any standard technique, preferably by flexographic or gravure printing.

Gravure and flexography are the major printing processes for printing packing materials. These processes can be used for printing a large variety of substrates, such as paper, cardboard, or polymer substrates. The gravure and flexographic printing processes are well-known. Reference may be made, for example, to Leach/Pierce (Eds.), The printing ink manual, Blueprint, London, 5th ed. 1993, p, 33-53. Also, the characteristics of gravure and flexographic inks are known to the skilled man. Reference may be made, for example, to Leach/Pierce (Eds.), The printing ink manual, Blueprint, London, 5th ed. 1993, p, 473-598. The respective content of those chapters is incorporated herein by reference.

The printed article may comprise additional layers, such as an overprint varnish being applied onto the printing ink layer in order to protect and shield the ink layer from the environment. Any overprint varnish conventionally used in flexible packaging applications may be used. Such overprint varnishes are known and can be applied on the printing ink layer by any standard technique, preferably by flexographic or gravure printing.

According to another embodiment, an additional layer may be provided between said optional primer layer and said printing ink layer applied on said primer layer. In a preferred embodiment where also an overprint varnish is applied onto the printing ink layer, this results in a structure where the printing ink layer is provided between two additional layers, so that the printing ink layer is encapsulated. Those additional layers and methods of producing them are known in the art, for example from WO 2021/165081 A1.

According to the present invention, the above-described printed article can be quickly and efficiently deinked.

Thus, the present invention is also related to a method for deinking a printed polymer article, comprising the steps:
a) Providing an aqueous solution comprising 0.5-10 wt.-% of a base, preferably NaOH, and 0.1-5 wt.-% of a composition described above, wherein the wt.-% are based on the entire amount of the aqueous solution,
b) Adding the printed polymer article to be deinked to the solution of step a),
c) Deinking the printed polymer article under stirring for 2-30 min, preferably 5-20 min, preferably at a temperature in the range from 50-90°C, preferably 60-85°C.

It is to be understood that if instead of the composition of the present invention the diluted composition mentioned above is used, a different amount of said diluted composition is to be added in step a) above. In both cases, the same amounts of surfactants a) to c) of the composition of the present invention should be included in the aqueous solution of step a).

According to the present invention, said deinking involves treatment of a printed article with an alkaline aqueous solution having a pH value from more than 7 to 13, more preferably 7.5 to 12.5. Preferably, said deinking is carried out at an elevated temperature of between 50 to 90°C, preferably 60 to 85°C, preferably within a period of time in the range between 0 to 15 minutes, more preferably 1 to 10 minutes, especially preferable 2 to 6 minutes.

Preferably, said alkaline aqueous solution comprises 0,5 to 10 wt.%, preferably 0,5 to 5 wt.-%, more preferably 1-5 wt.-%, especially preferably 1-3 wt.-%, based on the entire weight of the aqueous solution, of a base, preferably an alkali or earth alkali hydroxide, such as sodium hydroxide (NaOH), KOH, or LiOH. Preferably, NaOH is used.

Said alkaline aqueous solution comprises as essential component 0.1-5 wt.-% of a composition according to the present invention as described above.

Optionally, the alkaline aqueous solution may contain a surfactant. According to the present invention, any conventionally available surfactant may be used. Preferably, said alkaline aqueous medium comprises 0.1 to 5 wt.%, preferably 0.1 to 1 wt.-%, based on the entire weight of the aqueous medium, of a surfactant.

It is to be understood that as used herein the wt.-% are based on the entire weight of the alkaline aqueous solution, and the sum of wt.-% of the components described above, together with the amount of water present, does not exceed 100 wt.-%.

The alkaline aqueous solution to be used in the method according to the present invention may be prepared by adding together the components described above in a suitable vessel, and mixing the components, preferably under stirring and optionally heating.

To that alkaline aqueous solution, the printed polymer article to be deinked is added.

According to a preferred embodiment of the present invention, the printed article to be deinked is comminuted into smaller pieces before deinking is carried out. It has been found that smaller pieces can be deinked more rapidly than larger pieces.

The suitable size of the pieces to be deinked depends on the nature of the printed article and can be easily optimized by a skilled person. According to a preferred embodiment of the present invention, the printed polymer article is added to the alkaline aqueous solution in the form of flakes having a size in the range from 0.1cm x 0.1cm to 6cm x 6cm, preferably 0.2cm x 0.2 cm to 4cm x 4cm.

After the printed article has been added to the alkaline aqueous solution described above, deinking of the printed polymer article is carried out under stirring for 2-30 min, preferably 5-20 min, at a temperature in the range from 50-90°C, preferably 60-85°C.

According to a preferred embodiment of the present invention, the ratio of alkaline aqueous solution to the printed polymer article is in the range from 5:1 to 100:1.

It has been found that under those conditions the printed polymer article is deinked within a very short time. Preferably, said step of deinking the printed article is conducted for a time in the range between 1 to 10 min, preferably 2 to 8 min and especially preferred for 2 to 6 min.

The deinking step of the present invention can be carried out in any conventional device. Preferably, said device is equipped with a heating unit and a stirring unit. According to a preferred embodiment of the present invention, deinking is carried out in a device selected from the group consisting of a mixing vessel, a trough-screw conveyor, a pipe-screw conveyor, a friction washer, a refinement disk, and combinations thereof. These devices are generally known and available in the art and do not have to be discussed in detail.

When the printed product to be treated is a laminate, in the method according to the present invention also delamination may occur within a period of time depending on the kind of laminate.

After deinking, the substrate of the printed article deinked according to the present invention is substantially devoid of printing ink, i.e. there should not be any observable remaining printing ink on the substrate. Accordingly, the substrate that has been deinked according to the present invention can be readily recycled by any conventional recycling method in the art, e.g. melt extrusion.

After deinking, the deinked substrate of the printed article is typically subjected to further processing steps, such as rinsing, drying and/or granulation. Such steps are known in the art. For example, rinsing may be carried out in a similar device as used for the deinking and optional delamination step, for example in a trough-screw conveyor, a friction washer, a refinement disk, a stirring tank, thereof. Drying may be carried out in any conventional drying apparatus, such as a thermal drier, a centrifugal drier or a friction washer. Granulation may be carried out in any conventional granulation apparatus, such as an extruder.

For quality evaluation of delaminated and deinked samples the colorimetric AE-values are measured against the unprinted film as reference. A ΔE-value < 2.0 indicates full deinking of the sample, and the deinking step according to the present invention can be stopped upon reaching that value.

The present invention will now be described below in more detail by reference to non-limiting figures and examples.
- Fig. 1a: shows a picture of flakes containing a blue ink layer that were treated with a quaternary ammonium surfactant
- Fig. 1b: shows a picture of flakes containing a blue ink layer that were treated with an ethoxylated fatty alcohol surfactant
- Fig. 1c: shows a picture of flakes containing a blue ink layer that were treated with an amine oxide surfactant
- Fig. 1d: shows a picture of flakes containing a blue ink layer that were treated with the composition according to the present invention
- Fig. 2a: shows a picture of flakes containing a red ink layer that were treated with the composition according to the present invention
- Fig. 2b: shows a picture of flakes containing a red ink layer that were treated with the composition according to the present invention with the addition of a trialkyl phosphine.
- Fig. 3: shows the results of deinking with a mixture of surfactants from the prior art and compositions according to the present invention.
- Fig. 4a: shows a picture of flakes containing a blue ink layer that were treated with an ethoxylated fatty alcohol surfactant
- Fig. 4b: shows a picture of flakes containing a blue ink layer that were treated with the composition according to the present invention

### Example 1

5 g of a polymer substrate carrying a blue ink layer were comminuted to flakes and provided in a beaker with a propeller stirrer filled with a washing solution of 200 mL water and 1 wt.-% NaOH. The beaker was operated with 500rpm stirring speed.

1 wt.-% of a surfactant (based on the entire amount of the washing solution) were added to said washing solution, and deinking was performed for 10 min at 70 °C. The surfactant was either a quaternary ammonium surfactant as described herein, or an ethoxylated fatty alcohol surfactant as described herein, or an amine oxide surfactant as described herein, or a composition according to the present invention. The composition according to the present invention contained 34 wt.-% of a quaternary ammonium surfactant as described herein, 35% of an ethoxylated fatty alcohol surfactant as described herein, and 30% of an amine oxide surfactant as described herein, together with 1% of isopropyl alcohol as an organic solvent.

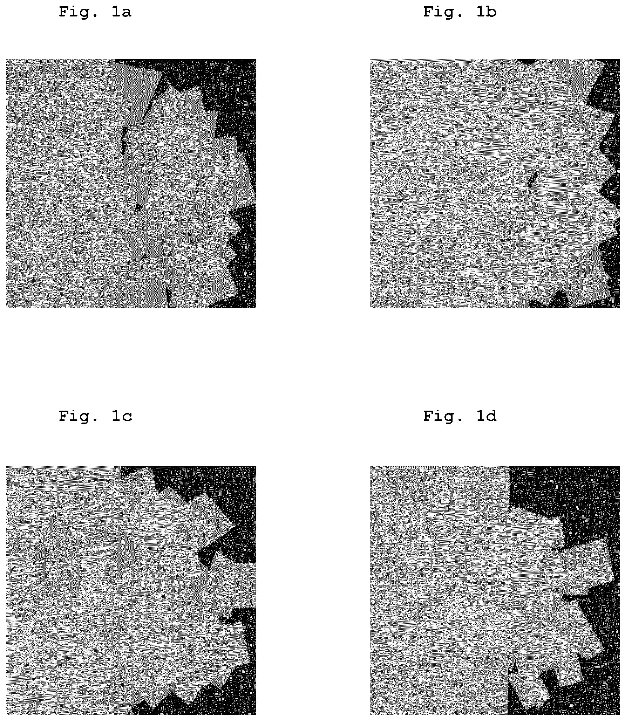

The results are shown in Figs. 1a to 1d.

It can be seen that after treatment with a single surfactant, the treated flakes still exhibited some blue color. On the other hand, treatment with the composition according to the present invention (i.e. with the combination of the three surfactants) unexpectedly resulted in a complete discoloration of the flakes.

### Example 2

5 g of a polymer substrate carrying a red ink layer were comminuted to flakes and treated as described above in example 1, but either with the composition according to the present invention (i.e. with the combination of the three surfactants) alone or with the addition of 0.05 wt.-% (based on the entire amount of the washing solution of example 1) of a trialkyl phosphine having C₁₋₁₀ linear or branched alkyl groups.

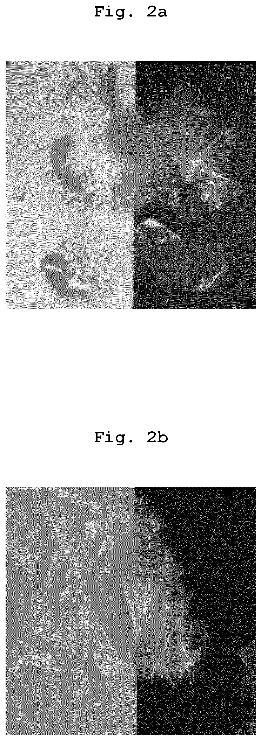

The results are shown in Figs. 2a and 2b.

The substrate treated in example 2 is very difficult to deink. It can be seen in Fig. 2a that with the composition according to the present invention (i.e. with the combination of the three surfactants) alone already significant deinking could be obtained (AE= 6.86 ± 2.68), and that deinking could be further improved by adding a trialkyl phosphine (ΔE= 1.36 ± 0.67).

### Example 3

A printed substrate was treated with either a mixture of 0.5 wt.-% hexadecyltrimethylammonium bromide (CTAB) and 0.5 wt.-% ethoxylated alcohol (AEO 5, trade name Witconol SN-70) (see Gecol et al., Colloid Polym. Sci. (2003) 281: 1172-1177), or with the composition according to the present invention as used in example 1. The substrate was a PE (polyethylene film) with 55pm thickness, on which a sequence of a white ink layer and a blue ink layer was applied, followed by an overprint varnish layer.

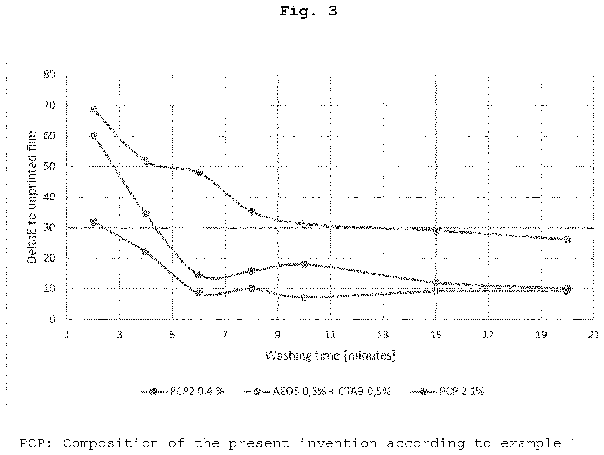

The results are shown in Fig. 3. It can be seen that treatment with the composition according to the present invention, either in an amount of 0.4 wt.-% or in an amount of 1 wt.-% (based on the entire weight of the washing solution as used in example 1), better deinking was achieved than with the mixture of surfactants suggested in the prior art (as can be seen by the lower ΔE values).

### Example 4

A MDOPE/PE laminate with a delamination/deinking primer as substrate having a blue ink layer was comminuted to flakes having a size of 0.5 cm x 0.5 cm. The flakes were provided in a beaker with a propeller stirrer filled with an aqueous washing containing 5 wt.-% NaOH and 0.15 wt.-% of a defoaming agent. The beaker was operated with 800rpm stirring speed.

0.2 wt.-& of an ethoxylated alcohol (AEO) or 0.5 wt.-% of the composition according to the present invention as used in example 1 (i.e. the same effective amounts of AEO and the composition of example 1) were added.

Deinking was carried out at 85°C for 60 min.

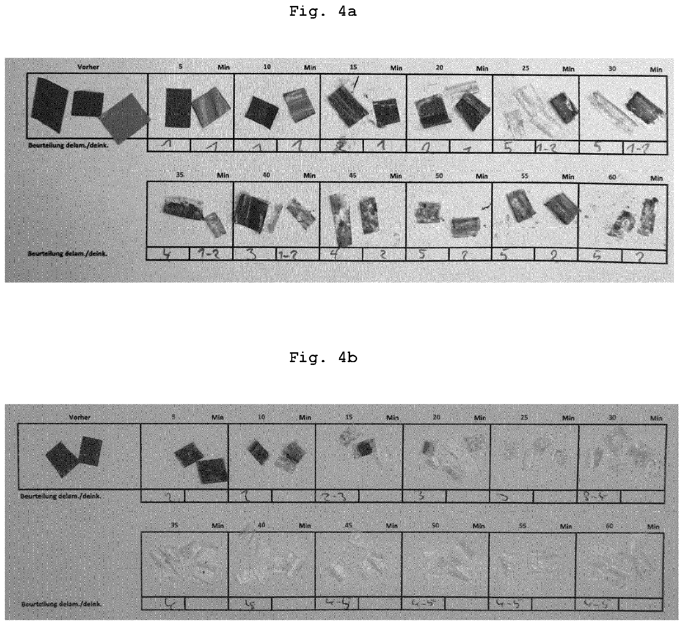

The results are shown in Figs. 4a and 4b.

It can be seen from Fig. 4a that with the ethoxylated alcohol (AEO) that even after 60 min (the right picture in the lower row), the flakes still exhibited a clearly visible blue color. On the other hand, it can be seen from Fig. 4b that with the composition according to the present invention as used in example 1, already after 35 min. The flakes were essentially colorless.

## Claims

1. A composition for deinking of a printed polymer article, comprising
a) 15-80 wt.-% of a quaternary ammonium surfactant having the formula NR¹R²R³R⁴⁺ X⁻
wherein
R¹, R², R³ and R⁴ are the same or different and denote a C₁₋₂₀ linear or branched alkyl group; and
X⁻ denotes a physiologically acceptable monovalent anion, preferably a halogenide, more preferably Cl⁻ or Br⁻;
b) 10-65 wt.-% of a propoxylated, ethoxylated or propoxylated and ethoxylated alcohol having the formula CHR⁵R⁶R⁷ wherein
R⁵ and R⁶ are the same or different and denote a C₁₋₂₀ linear or branched alkyl group; and
R⁷ denotes a moiety of the formula CH₂O(PO)ₓ(EO)_{y}-H wherein
EO is -CH₂CH₂O-
PO is -CH₂CH₂CH₂O- or -CH(CH₃)CH₂O-
x and y are the same or different and denote an integer in the range from 0 to 20, with the proviso that x and y cannot be both 0 at the same time; and
c) 5-45 wt.-% of an amine oxide having the formula 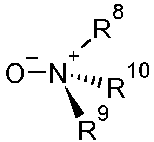
R⁸ and R⁹ are the same or different and denote H or a C₁₋₂₀ linear or branched alkyl group; and
R¹⁰ denotes a C₁₋₂₀ linear or branched alkyl group,
wherein the wt.-% are based on the entire weight of the composition, and the sum of wt.-% of components a) to c) does not exceed 100 wt.-%.

2. The composition according to claim 1, **characterized in that** in component a)
R¹ denotes a C₅₋₂₀ linear or branched alkyl group, preferably a C₁₀₋₂₀ linear or branched alkyl group, and
R², R³ and R⁴ are the same or different and denote a C₁₋₁₀ linear or branched alkyl group, preferably a C₁₋₅ linear or branched alkyl group.

3. The composition according to claim 1 or 2, **characterized in that** in component b)
x=0 and y denotes an integer in the range from 1 to 15, preferably 2 to 10, or
y=0 and x denotes an integer in the range from 1 to 15, preferably 2 to 10.

4. The composition according to any one of claims 1 to 3, **characterized in that** in component b)
R⁵ and R⁶ are the same or different and denote a C₂₋₁₅ linear or branched alkyl group, preferably a C₃₋₁₀ linear or branched alkyl group.

5. The composition according to any one of claims 1 to 4, **characterized in that** in component c)
R⁸ and R⁹ are the same or different and denote H or a C₁₋₁₀ linear or branched alkyl group, preferably a C₁₋₅ linear or branched alkyl group; and
R¹⁰ denotes a C₅₋₂₀ linear or branched alkyl group, preferably a C₁₀₋₂₀ linear or branched alkyl group.

6. The composition according to any one of claims 1 to 5, **characterized in that** the composition comprises 20-70 wt.-%, preferably 30-60 wt.-% of component a), 15-60 wt.-%, preferably 20-50 wt.-% of component b), and 10-40 wt.-%, preferably 15-30 wt.-% of component c).

7. The composition according to any one of claims 1 to 6, **characterized in that** the composition comprises a mixture of one or more of components a), components b), components c) .

8. The composition according to any one of claims 1 to 7, **characterized in that** the composition additionally comprises 0.01-2 wt.-%, preferably 0.05-1 wt.-% of a component d) selected from the group consisting of a trialkyl amine having C₁₋₁₀ linear or branched alkyl groups, a trialkyl phosphine having C₁₋₁₀ linear or branched alkyl groups, and combinations thereof.

9. The composition according to any one of claims 1 to 8, **characterized in that** the composition additionally comprises 1-30 wt.-%, preferably 2-20 wt.-% at least one additive, preferably selected from the group consisting of phosophonic acid derivatives, phosphine acid derivatives, alkylethoxylates, alkylether, acrylic acid, and combinations thereof.

10. Diluted composition, comprising a composition according to any one of claims 1 to 9 and a solvent, preferably water, in a ratio from 1:5 to 1:10.

11. A method for deinking a printed polymer article, comprising the steps:
a) Providing an aqueous solution comprising 0.5-10 wt.-% of a base, preferably NaOH, and 0.1-5 wt.-% of a composition according to any one of claims 1 to 9, wherein the wt.-% are based on the entire amount of the aqueous solution,
b) Adding the printed polymer article to be deinked to the solution of step a),
c) Deinking the printed polymer article under stirring for 2-30 min, preferably 5-20 min, preferably at a temperature in the range from 50-90°C, preferably 60-85°C.

12. The method according to claim 11, **characterized in that** the substrate of the printed polymer article is selected from the group consisting of polyethylene and polypropylene.

13. The method according to any one of claims 11 to 12, **characterized in that** the printed polymer article comprises an ink layer that has been applied using a solvent-based ink.

14. The method according to any one of claims 11 to 13, **characterized in that** the printed polymer article is added in step b) in the form of flakes having a size in the range from 0.1cm x 0.1cm to 6cm x 6cm, preferably 0.2cm x 0.2 cm to 4cm x 4cm.

15. The method according to any one of claims 11 to 14, **characterized in that** in step a) 1-5 wt.-%, preferably 1-3 wt.-% of a base, preferably NaOH, are used.
